# EUROPÄISCHE PATENTANMELDUNG

(11) **EP 0 718 051 A1**
(43) Veröffentlichungstag der Anmeldung: **26.06.1996**
(21) Anmeldenummer: 94120356.4
(22) Anmeldetag: 22.12.1994
(51) Int. Cl.: B21C 3/02, B21C 3/18, B23P 11/02, B23P 15/24

(54) **Verfahren zur Herstellung von geschrumpften rotationssymetrischen Ziehwerkzeugen für das Kaltziehen von metallischen Drähten, Stangen und Rohren sowie für das Verdichten von Seilen und Litzen**

(71) Anmelder: Dr.-Ing. Gerd Schwier GmbH Ingenieurbüro für Metallformung, D-09112 Chemnitz (DE)
(72) Erfinder: Götzler, Friedmar, Dipl.-Ing., D-01744 Dippoldiswalde (DE); Schwier, Gerd, Dr.-Ing. Dipl.-Ing., D-09113 Chemnitz (DE)
(74) Vertreter: Horn, Klaus, Dr.

(57) **Zusammenfassung**

Die Erfindung bezieht sich auf das technische Gebiet der Arbeitsverfahren, insofern auf die Metallbearbeitung durch Schrumpfen zum Zwecke des Verbindens von Metallwerkstücken, insbesondere auf die Festlegung und Gestaltung sowie Herstellung von Ziehwerkzeugen für die Umformung von Draht, Stangen und Rohren aller Abmessungen.

Das zu lösende Problem besteht darin, eine fertigungstechnisch sichere Verfahrensweise zu schaffen, mit der betriebssichere Ziehwerkzeuge ohne formschlüssigen Festpunkt in der Berührungsebene von Hartstoffkern (2) und Fassung (1) materialsparend gebildet werden können. Erfindungsgemäß werden aus den vorgesehenen technologischen Einsatzbedingungen und der davon abhängigen Ziehholgeometrie (3) des Hartstoffkernes (2) die relevanten Spannungskenngrößen sowie das korrespondierende Schrumpfübermaß nach geeigneten Methoden vorausbestimmt. Entsprechend dieser Vorausbestimmung erfolgt die Werkstoffauswahl und Dimensionierung der Werkzeugkomponenten und die Fertigung der vorspannungsbestimmenden Maße. Mittels definierter Erwärmung und Abkühlung wird das Ziehwerkzeug erhalten.

## Beschreibung

Die Erfindung bezieht sich auf das technische Gebiet der Arbeitsverfahren, insofern auf die Metallbearbeitung durch Schrumpfen zum Zwecke des Verbindens von Metallwerkstücken, insbesondere auf die Verfahrensweise zur Herstellung von Ziehwerkzeugen für die Umformung von Draht, Stangen und Rohren aller Abmessungen.

Allgemein bekannt ist, daß die derzeit eingesetzten Ziehwerkzeuge mit Hartmetallkern im wesentlichen mit dem wissenschaftlich-technischen Erkenntnisstand von vor etwa 60 Jahren gefertigt sind.
Seiner Dimensionierung lag das ebene Modell der klassischen Mechanik zugrunde. Wesentliche Einflußgrößen, wie Ziehholgeometrie, die Belastung der Arbeitsflächen während der Verformung, der Temperatureinfluß während der Herstellung und im technologischen Ziehprozeß wurden und werden i.d.R. noch nicht oder nur empirisch berücksichtigt. Diese Unsicherheit spiegelte sich in einer Überdimensionierung der Werkzeuge und in zusätzlich konstruktiven Sicherungselementen bei der Fassung, z.B. in Form von Stufen- oder Kegelbohrungen zur Kernfixierung, wider. Andererseits korrespondierte auch die Werkstoffauswahl für die Fassung, z.B. Automatenstahl oder Automatenmessing mit ungünstigen Eigenschaften in Querrichtung, und für den Hartmetallkern nicht oder nur selten mit den Betriebsbeanspruchungen. Weitere Qualitätsprobleme entstanden häufig durch fehlerhaftes Fügen der Werkzeuge infolge zu hoher Schrumpftemperatur, durch Kalteinpressen der Hartmetallkerne in die Fassung und/oder durch falsche Übermaße. Die derzeitigen Herstellungstechnologien für geschrumpfte Ziehwerkzeuge sind weder wirtschaftlich, noch gewährleisten sie reproduzierbar und sicher einen der technologischen Aufgabe angepaßten Vorspannungszustand und damit ausreichendes Verschleißverhalten unter Betriebsbedingungen.
Die DD 281 974 beschreibt ein Verfahren, welches o.g. Mängel schon in einigen Teilen abstellt, dennoch beinhaltet diese technische Lösung in ihrer Gesamtheit noch erhebliche technische Nachteile. Es wird hierbei auch weiterhin von einer formschlüssigen Fixierung des Hartstoffkernes in der Fassung ausgegangen, wodurch eine materialsparende Dimensionierung, eine technologisch einfachere Fertigung und damit auch eine kostengünstigere Fertigung sowie ein einfaches Recycling der Werkzeugkomponenten nicht realisiert werden kann.
Die DE 36 43 652 beschreibt eine Verfahrensweise, bei der zur Herstellung der Schrumpfverbindung die zwei Werkstücke gemeinsam in einem Ofen gleichmäßig aufgeheizt werden, sie so angeordnet werden, daß sie durch Schwerkraft ineinandergleiten und bei der im Anschluß daran die derart verbunden Werkstücke langsam im Ofen zu Abkühlung kommen.
Bekannt sind weiterhin die Gruppen der Werkzeugerfindungen und der Verfahrenserfindungen zu deren Herstellung, wobei z.B. Drahtziehkörper aus Massen durch Sintern hergestellt werden, dazu beispielsweise DE 31 45 690. Diese technischen Lösungen sind jedoch zur Beurteilung des Standes der Technik hinsichtlich des nachfolgenden Erfindungsvorschlages nicht relevant.

Von vorgenanntem ausgehend, liegt der Erfindung die Aufgabe zugrunde, eine Verfahrensweise zu entwickeln, welche es ermöglicht, auf einen notwendigen Festpunkt, gegebenenfalls als Schulter, in der Fassung für den Hartstoffkern verzichten zu können, und dennoch gewährleistet, daß der Hartstoffkern durch einen vorausberechneten Vorspannungszustand, der alle wesentlichen Einflußgrößen des Betriebszustandes berücksichtigt, sicher gehalten wird, welche es im weiteren ermöglicht, eine definierte, mindestens 1,5-fache Sicherheit gegen Axialverschiebung des Hartstoffkernes in einer zylindrischen Durchgangsbohrung der Fassung, d.h. in einer Fassung ohne Widerlager, unter Betriebsbedingungen zu erreichen. Darüber hinaus soll eine einfache Fertigung, ein günstiger Materialeinsatz und insbesondere ein einfaches Recycling der Werkzeugkomponenten möglich sein.

Diese Aufgabe wird bei der gattungsgemäßen Verfahrensweise durch die kennzeichnenden Merkmale der Ansprüche 1 bis 3 gelöst. Zunächst erfolgt die Vorausbestimmung der relevanten Spannungskenngrößen, insbesondere der Tangentialspannung im Hartstoffkern und der Vergleichsspannung in der Fugenfläche sowie des Schrumpfübermaßes, vorzugsweise 0,1 bis 0,5 % des Fügedurchmessers, aus den für das Ziehwerkzeug vorgesehenen technologischen Einsatzbedingungen und der daraus abzuleitenden, bzw. davon abhängigen Ziehholgeometrie des Hartstoffkernes. Damit wird eine besonders materialsparende zugleich aber auch kostengünstige Dimensionierung dieser Ziehwerkzeuge unter Berücksichtigung aller relevanten Einsatzbedingungen auf der Grundlage neuester Berechnungsmethoden bewirkt. Danach wird die Bestimmung bzw. Festlegung der Mindestwandstärke der Fassung für den Hartstoffkern bei einem konstruktiven Aufbau ohne Widerlager vorgenommen. Nur auf der Grundlage o.g. vorausberechneter Spannungskenngrößen, des korrepondierenden Schrumpfmaßes und somit des erzeugten definierten Vorspannungszustandes wird eine konstruktive Ausführung für die Fassung ohne Widerlager für den Hartstoffkern ermöglicht, sowie gleichzeitig eine Abmagerung der Fassungswandstärke erreicht. Anschließend erfolgt die Werkstoffauswahl für den Hartstoffkern entsprechend der vorausberechneten Tangentialspannung nach der Biegefestigkeit, wobei in Abhängigkeit von der technologischen Aufgabenstellung, weitere Kenngrößen, insbesondere Härte, Porösität und das Gefüge mit seiner Korngröße zu berücksichtigen sind. Danach wird das Außenrundschleifen des Hartstoffkernes mit der ISO-Grundtoleranz IT 5 und einem Mittenrauhwert von < 0,63 µm durchgeführt, wobei mindestens einseitig eine Fase am Außendurchmesser gebildet wird. Die aufgeführten ISO-Grundloleranzen für die Fertigung von Kern und Fassung sowie die Mittenrauhwerte gewährleisten eine hinreichend geringe Streuung des Schrumpfübermaßes und damit des Vorspannungszustandes. Die Auswahl eines Werkstoffes für die Fassung hat so zu erfolgen, daß die Streckgrenze des Werkstoffes für die Fassung größer ist als die vorausbestimmte Vergleichsspannung in der Fugenfläche. Durch die Festlegung der erforderlichen Streckgrenze für den Fassungswerkstoff in dieser Abfolge der Verfahrensschritte wird bewirkt, daß keine unzulässige Plastifizierung der Fassung unter Betriebsbeanspruchung und damit keine ungünstige Veränderung des Vorspannungszustandes eintritt. Das anschließende Ausdrehen der zylindrischen Durchgangsbohrung mit der ISO-Grundtoleranz IT 5 und dem Mittenrauhwert < 2,5 µm erfolgt so, daß das vorausbestimmte Schrumpfübermaß von vorzugsweise 0,1 bis 0,5 % des Fügedurchmessers, insbesondere 0,3 % des Fügedurchmessers gewährleistet ist. Es erfolgt dann eine schnellstmögliche durchgreifende Erwärmung der Fassung auf eine Temperatur, die ein ausreichendes Fügespiel gewährleistet, die aber zur Vermeidung von maßverändernder Zunderbildung und festigkeitsmindernder Strukturveränderung 600 °C nicht überschreiten darf und ein fertigungstechnisches Temperaturerfordernis auf der Grundlage des jeweiligen Fassungswerkstoffes nicht unterschreitet. Dies ist in der vorgeschlagenen Lehre vorgesehen, um Zeit, Kosten im Fertigungsverfahren einzusparen, sowie auch ein zeitabhängiges Wachstum der Anlaufschichten mit ihren Maßveränderungen an diesen Werkzeugteilen zu vermeiden.
In dieser Konstellation erfolgt das Herstellen der Schrumpfverbindung zwischen erwärmter Fassung und kühlem Hartstoffkern durch Fügen mit nachfolgender beschleunigter Luftabkühlung.

An einem bevorzugten Ausführungsbeispiel wird die Erfindung im folgenden näher erläutert.

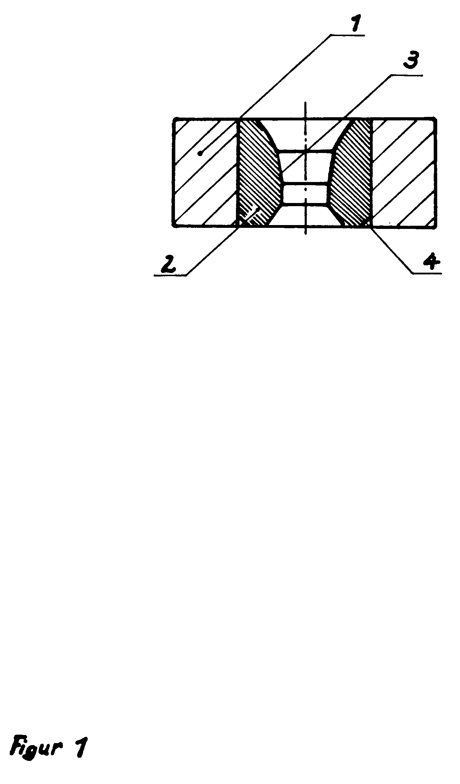

Fig. 1 zeigt ein ohne Festpunkt in der Fassung zu schaffendes, bevorzugtes Ziehwerkzeug, wobei wie folgt gekennzeichnet wurde:
1 Fassung des Ziehwerkzeuges
2 Hartstoffkern des Ziehwerkzeuges
3 Ziehholgeometrie
4 Fase am Hartstoffkern
Folgende Ausgangsdaten sind beachtlich:
- Vormaterial :: Walzdrahtdurchmesser 8,5 mm der Stahlmarke D 45-2 nach DIN 17140 T 1, Zugfestigkeit 670 MPa
- Fertigmaterial :: kaltgezogener Draht oder Stäbe mit einem Durchmesser von 7,00 mm nach DIN 177, Zugfestigkeit 820 - 870 MPa
- Umformgrad :: 32 %
- Umformtemperatur:: Raumtemperatur
- Oberflächenausführung :: trockenblank.
Die Ziehholgeometrie ist abgeleitet aus den Ausgangsdaten wie folgt darzustellen:
- Ziehwinkel :: 14 °
- Führungslänge :: 2,70 mm
- Ziehholdurchmesser:: 6,85 mm unter Berücksichtigung einer Drahtauffederung von 7 µm
In nachfolgender Verfahrensweise erfolgt als erstes die Vorausberechnung der Spannungskenngrößen auf der Grundlage einer Kerngröße von 16 x 13 mm mit vorgenannter Zieholgeometrie 3 und einem Schrumpfübermaß von 50µm nach dem Berechnungsmodell der Finiten-Elemente-Methode unter Annahme einer zulässigen Plastifizierung der Fassung 1 von maximal 30 % und einem Mindestwiderstand gegen axiale Kernverschiebung von 40 - 60 kN und hat als Ergebnis:
- Tangentialspannung im Kern:: 210 MPa
- Vergleichsspannung in Fugenfläche:: 400 MPa.

Danach erfolgt die Dimensionierung und Werkstoffestlegung für die Werkzeugkomponenten, abgeleitet aus der vorausgegangenen Vorausberechnung der Spannungskenngrößen. Im dargestellten Beispiel wird die Mindestwandstärke der Fassung 1 mit 8 mm erhalten, wobei dies einem Außendurchmesser von 32 mm entspricht. Gegebenenfalls muß die Außenabmessung des Werkzeuges entsprechend der angebotenen Kassetten bzw. Aufnahmen modifiziert werden. Die anschließende Werkstoffestlegung auf der Grundlage der bisherigen Verfahrensschritte ergibt unter den Bedingungen dieses Beispieles für dieses den Qualitätsbaustahl der Marke C 60 nach EN 10083-2 sowie das Halbzeug Stabstahl, warmgewalzt oder geschmiedet, geschält auf einen Durchmesser von 32 mm nach ISO-Grundtoleranz IT 11 mit attestierter Streck- oder Fließgrenze von > 450 MPa. Für den Hartstoffkern 2 wird in diesem Verfahrensschritt erhalten: ISO-Kern 16x13 mm mit 6 mm Innendurchmesser, Hartmetallsorte G10 mit einer Biegefestigkeit von 2000 bis 2500 MPa. Im weiteren erfolgt nun die Fertigbearbeitung der Werkzeugkomponenten. Die Fassung wird vom Rohling abgelängt, beide Stirnseiten plangedreht und die zylindrische Durchgangsbohrung auf 15,95 mm mit der Toleranz + 0/ - 8 µm und einem Mittenrauhwert < 2,5 µm gedreht. Der Hartstoffkern 2 wird durch spitzenloses Außenschleifen des zylindrischen Außendurchmessers auf 16 mm +/- 4 µm mit einem Mittenrauhwert von < 0,63 µm erstellt. Danach erfolgt die Erwärmung der Stahlfassung 1 auf 500 °C bei einer Ofenliegezeit bis maximal 5 min. Anschliessend werden die Werkzeugkomponenten dem Fügevorgang bei einem Fügespiel von ca. 45 µm unterzogen. Nach Abschluß des Fügevorganges wird das gefügte Ziehwerkzeug mit Preßluft beschleunigt auf Raumtemperatur abgekühlt. Abschließend erfolgt die Einarbeitung der Ziehholgeometrie in den Hartmetallkern gemäß vorgenannter Werte.
Mit dieser vorgeschlagenen Verfahrensweise wird die Aufgabe und das Ziel der Erfindung, eine neuartige technische wie auch wirtschaftliche Herstellung von geschrumpften rotationssymetrischen Ziehwerkzeugen, die ohne formschlüssigen Festpunkt in der Berührungsebene von Hartstoffkern und Fassung auskommen, auf der Grundlage der Integration von geeigneten Spannungsberechnungs- und fertigungstechnischen Verfahren erreicht, sowie ermöglicht, daß die so hergestellten Ziehwerkzeuge im Einsatz ein bisher noch nicht erreichtes günstiges Verschleißverhalten aufweisen und ein besonders einfaches Recycling ermöglichen.

## Patentansprüche

1. Verfahren zur Herstellung von geschrumpften rotationssymmetrischen Ziehwerkzeugen für das Kaltziehen von metallischen Drähten, Stangen und Rohren sowie für das Verdichten von Seilen und Litzen, wobei die Fassungen mit einem Übermaß und einem Schleifaufmaß hergestellt und Spannungsentlastungskerben in diese entlang der Innenumfangslinie in der Nähe von einzurichtenden, formschlüssig wirkenden Merkmalen eingearbeitet werden,
**dadurch gekennzeichnet,**
daß zur Realisierung eines bestimmten, beabsichtigten Spannungszustandes zunächst eine Vorausbestimmung der relevanten Spannungskenngroßen, insbesondere der Tangentialspannung im Hartstoffkern (2) und der Vergleichsspannung in der Fugenfläche sowie des Schrumpfübermaßes aus den für das Ziehwerkzeug vorgesehenen technologischen Einsatzbedingungen und der daraus abzuleitenden bzw. abhängigen Ziehholgeometrie (3) des Hartstoffkernes (2) erfolgt, daß danach die Bestimmung bzw. Festlegung der Mindestwandstärke der Fassung (1) für den Hartstoffkern (2) bei einem konstruktiven Aufbau ohne Kernwiderlager vorgenommen wird, daß anschließend die Werkstoffauswahl für den Hartstoffkern (2) gemäß der vorher ermittelten Tangentialspannungswerte nach der Biegefestigkeit, wobei weitere Kenngrößen, insbesondere Härte, Porösität und das Gefüge mit seiner Korngröße zu berücksichtigen sind, vorgenommen wird, daß danach das Außenrundschleifen des Hartstoffkernes (2) mit der ISO-Grundtoleranz IT 5 und einem Mittenrauhwert von < 0,63 µm erfolgt, wobei mindestens einseitig eine Fase am Hartstoffkern ausgebildet wird, daß eine Bestimmung des Werkstoffes für die Fassung (1) so erfolgt, daß die Streckgrenze des Werkstoffes größer ist als die vorher bestimmte Vergleichsspannung in der Fugenfläche, daß das anschließende Ausdrehen der zylindrischen Durchgangsbohrung der Fassung (1) mit der Grundtoleranz IT 5 und dem Mittenrauhwert < 2,5 µm so erfolgt, daß das vorausbestimmte Schrumpfübermaß gewährleistet ist, daß danach eine schnellstmögliche, durchgreifende Erwärmung der Fassung (1) auf eine Temperatur, die ein ausreichendes Fügespiel gewährleistet, vorgenommen wird, die jedoch das fertigungstechnische Temperaturerfordernis des jeweils konkreten Fassungswerkstoffes nicht unterschreitet, daß im Anschluß daran das Fügen der erwärmten Fassung (1) und des kühlen Hartstoffkernes erfolgt und daß danach die hergestellte Konstellation mittels Luft beschleunigt abgekühlt, somit die Schrumpfverbindung eines Hartstoffkernes mit einer festpunktlosen Fassung zu einem Ziehwerkzeug für das Kaltziehen geschaffen wird.

2. Verfahren nach Anspruch 1,
**dadurch gekennzeichnet,**
daß die schnellstmögliche, durchgreifende Erwärmung der Fassung während einer Zeitspanne vorgenommen wird, die 15 min nicht überschreiten soll.

3. Verfahren nach Anspruch 1,
**dadurch gekennzeichnet,**
daß für das Schrumpfübermaß vorzugsweise 0,1 bis 0,5 %, insbesondere 0,3 % des Fügedurchmessers vorzusehen sind.

4. Verfahren nach Anspruch 1,
**dadurch gekennzeichnet,**
daß bei der schnellstmöglichen, durchgreifenden Erwärmung der Fassung (1) zur Vermeidung von maßverändernder Zunderbildung und festigkeitsvermindernder Strukturveränderungen 600 °C nicht zu über- und die fertigungstechnischen Temperaturerfordernisse auf der Grundlage des jeweiligen Fassungswerkstoffes nicht zu unterschreiten sind.
